# EUROPEAN PATENT APPLICATION

(11) **EP 3 674 810 A1**
(43) Date of publication of application: **01.07.2020**
(21) Application number: 19213322.1
(22) Date of filing: 03.12.2019
(51) Int. Cl.: G03G 15/00

(54) **IMAGE FORMING SYSTEM**

(30) Priority: 27.12.2018 JP 2018244915
(71) Applicant: KONICA MINOLTA, INC., Tokyo 100-7015 (JP)
(72) Inventor: IGAWA, Shin, Tokyo, 100-7015 (JP)
(74) Representative: Henkel & Partner mbB

(57) **Abstract**

There is provided an image forming apparatus (1, 5) capable of suppressing a decrease in printing efficiency and waste of sheets when there is a sheet determined to be abnormal.

An image former (15) according to an aspect of the present invention forms an image on a sheet. An image inspection unit (20) inspects the image which is formed on the sheet by the image former (15), the sheet being conveyed. A normal paper outputter (23) discharges a sheet determined to be normal in the inspection by the image inspection unit (20), and an abnormal paper outputter (24) discharges a sheet determined to be abnormal in the inspection by the image inspection unit (20). A control unit (10) causes the image former (15) to execute image formation of a same page of the sheet determined to be abnormal when the sheet has been determined to be abnormal in the inspection by the image inspection unit (20). In addition, the control unit (10) causes the image formation of the same page of a utilized sheet to be canceled when that utilizing the sheet discharged to the abnormal paper outputter (24) is inputted through an operator (13).

## Description

### Background

### Technological Field

The present invention relates to an image forming system.

### Description of the Related art

When an image forming apparatus forms an image on a sheet, a fault occurs in some cases due to various factors such as a process factor and a fault in the sheet. Since it is not preferable that a faulty item be present in the product (printed matter), an image inspection apparatus is connected to the image forming apparatus to inspect the product for the presence/absence of faults in some cases.

For example, the image inspection apparatus is disposed in the course of a conveyance path of a sheet on which an image has been formed by the image forming apparatus, and reads, with a sensor, the image formed on the conveyed sheet. Then, the image inspection apparatus compares the image data read by the sensor with the original image data and performs processing of judging whether the sheet is good or bad. In the processing of judging whether the sheet is good or bad, the sheet that has been judged to have a fault is outputted to a paper output tray different from a paper output tray to which a good product is outputted.

JP 2006-192884 A describes an image forming apparatus that detects an image abnormality formed on a recording sheet. In the image forming apparatus described in JP 2006-192884 A, when an image abnormality is detected by an abnormality detection unit, the print job is temporarily interrupted, and whether the print job is continued or not is decided based on a user instruction input.

However, in the image forming apparatus described in JP 2006-192884 A, every time an image abnormality is detected, the print job (image formation) is interrupted until the user moves to the paper output tray and inputs an instruction as to whether or not to continue the print job. Accordingly, when an image abnormality is detected, it takes long time to complete the print job in some cases, thereby decreasing printing efficiency. In addition, in order not to reduce the productivity, there is an apparatus that performs reprinting (recovery printing) without waiting for a user instruction input. However, in this case, even if the user takes a look at the sheet outputted to a different paper output tray and judges that the sheet does not have a fault, that sheet is wasted.

### Summary

The present invention has been made in consideration of the above situations, and an object thereof is to provide an image forming apparatus capable of suppressing a decrease in printing efficiency and waste of sheets when there is a sheet determined to be abnormal.

To achieve the abovementioned object, according to an aspect of the present invention, an image forming system reflecting one aspect of the present invention comprises: an image former that forms an image on a sheet; an image inspection unit that inspects the image which is formed on the sheet by the image former, the sheet being conveyed; a normal paper outputter that discharges a sheet determined to be normal in the inspection by the image inspection unit; an abnormal paper outputter that discharges a sheet determined to be abnormal in the inspection by the image inspection unit; an operator that accepts an input to utilize the sheet discharged to the abnormal paper outputter; and a control unit that causes the image former to execute image formation of a same page of the sheet determined to be abnormal when the sheet has been determined to be abnormal in the inspection by the image inspection unit, and causes the image formation of the same page of a utilized sheet in a different copy to be canceled when that utilizing the sheet discharged to the abnormal paper outputter is inputted through the operator.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a schematic configuration diagram showing a configuration example of an image forming system according to a first embodiment of the present invention;
Fig. 2 is a flowchart showing a flow of the image forming processing according to the first embodiment of the present invention;
Fig. 3 is a view showing a first example of an input screen displayed for entering the determination result of the user determination according to the first embodiment of the present invention;
Fig. 4 is a flowchart showing the first example of the user determination according to the first embodiment of the present invention;
Fig. 5 is a view showing a second example of the input screen displayed for entering the determination results of the user determination according to the first embodiment of the present invention;
Fig. 6 is a flowchart showing the second example of the user determination according to the first embodiment of the present invention;
Fig. 7 is a diagram for explaining a possible time for the determination by the user in the first embodiment of the present invention;
Fig. 8 is a schematic configuration diagram showing a configuration example of an image forming system according to a second embodiment of the present invention;
Fig. 9 is a flowchart showing a flow of image forming processing according to the second embodiment of the present invention;
Fig. 10 is a flowchart showing an example of the user determination according to the second embodiment of the present invention;
Fig. 11 is a view showing a screen for notifying that the order of a plurality of sheets determined to be utilizable is rearranged in the second embodiment of the present invention is rearranged;
Fig. 12 is a flowchart (part 1) showing a flow of image forming processing according to a third embodiment of the present invention;
Fig. 13 is a flowchart (part 2) showing the flow of the image forming processing according to the third embodiment of the present invention;
Fig. 14 is a view showing an input screen for entering the determination result of a first example of the user determination according to a fourth embodiment of the present invention; and
Fig. 15 is a view showing an input screen for entering the determination results of a second example of the user determination according to the fourth embodiment of the present invention.

### Detailed Description of Embodiments

Hereinafter, one or more embodiments of the present invention will be described with reference to the drawings. However, the scope of the invention is not limited to the disclosed embodiments. In this specification and the accompanying drawings, constituents having substantially the same functions or configurations are denoted by the same reference numerals, and redundant description will be omitted.

### 1. First Embodiment

### [Configuration of Image Forming System]

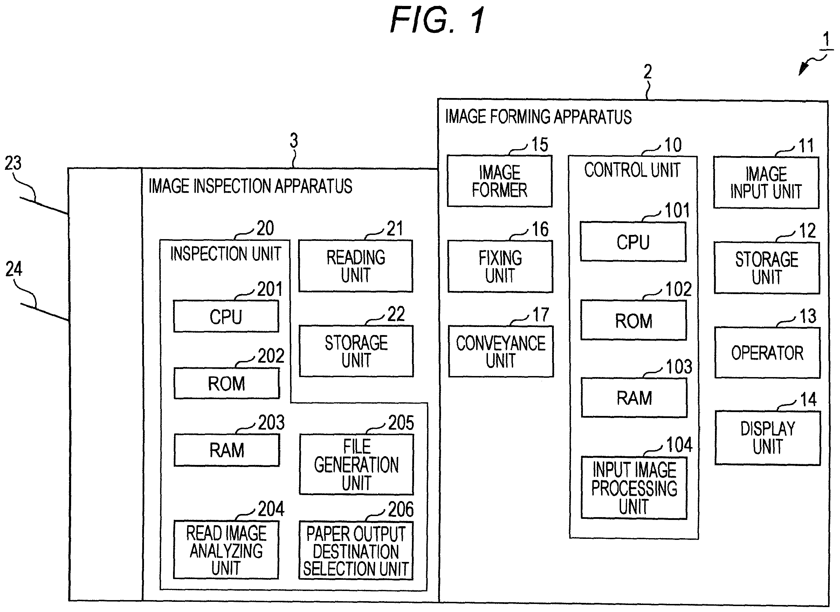

Fig. 1 is a schematic configuration diagram showing a configuration example of an image forming system according to a first embodiment of the present invention.

As shown in Fig. 1, an image forming system 1 according to the first embodiment includes an image forming apparatus 2 and an image inspection apparatus 3. The image forming apparatus 2 is one example of an image forming apparatus that forms an image on a sheet by an electrophotographic method of forming an image with static electricity.

For example, the image forming apparatus 2 forms a color image on a sheet in a tandem format in which toner images of four colors, yellow (Y), magenta (M), cyan (C) and black (K), are superimposed. The image forming apparatus 2 is connected to a personal computer (PC) operated by a user via a local area network (LAN) not shown. Then, a job is inputted into the image forming apparatus 2 from the PC via the LAN. The image forming apparatus 2 performs various processings, such as image forming processing, in accordance with the inputted job.

The image inspection apparatus 3 inspects whether the image formed (printed) on the sheet conveyed from the image forming apparatus 2 is normal or abnormal. The sheet conveyed to the image inspection apparatus 3 is printed matter on which the image is formed on both sides or one side. The image inspection apparatus 3 reads the image, which is formed on both sides or one side of the sheet by the image forming apparatus 2, and performs a predetermined inspection.

The image forming apparatus 2 includes a control unit 10, an image input unit 11, a storage unit 12, an operator 13, a display unit 14, an image former 15, a fixing unit 16 and a conveyance unit 17.

The image input unit 11 has an auto document feeder (ADF) and, for example, optically reads an image from a document placed on a document platen (not shown). Then, the image input unit 11 performs A/D conversion on the read image to generate image data (scan data).

The control unit 10 has a central processing unit (CPU) 101, a read only memory (ROM) 102, a random access memory (RAM) 103 and an input image processing unit 104.

The ROM 102 saves a program executed by the CPU 101, data used when the program is executed, and the like. The CPU 101 controls each unit constituting the image forming apparatus 2 by reading out the program saved in the ROM 102. In the RAM 103, variables, parameters, and the like generated during the arithmetic processing of the CPU 101 are temporarily written.

The input image processing unit 104 performs predetermined image processing on an input image included in the job inputted from the PC, and generates image data for printing, for example. Moreover, the input image processing unit 104 also performs image processing on image data acquired from the document read by the image input unit 11 or on image data acquired from the outside, and creates image data for printing. These image data for printing are sent to the image former 15.

The storage unit 12 saves parameters used when the CPU 101 of the control unit 10 executes a program, data obtained by executing the program, and the like. For example, the storage unit 12 saves information such as image forming conditions for each gray level. Note that the storage unit 12 may store a program executed by the CPU 101.

The operator 13 accepts various input operations by the user and outputs an operation signal to the control unit 10. The user can operates the operator 13 to perform settings and instructions for image formation (printing), such as document setting, image quality setting, magnification setting, application setting, output setting, single-side/double-side setting, and sheet setting (including sheet basis weight and presence/absence of gloss). Furthermore, information set using the operator 13 is stored in, for example, the storage unit 12.

In the present embodiment, the user checks the sheet determined to be abnormal by the image inspection apparatus 3 and judges whether to use (utilize) the sheet. Then, the user inputs, through the operator 13, the page number of the sheet that has been determined to be abnormal but determined to be utilizable.

Meanwhile, the RAM 103 is provided with a utilizable page counter for each page number. When the user inputs, through the operator 13, the page number determined to be utilizable, the control unit 10 (the CPU 101) adds "1" to the corresponding utilizable page counter in the RAM 103. Accordingly, the control unit 10 can grasp the page number and the number of pages determined to be utilizable.

The RAM 103 is also provided with an abnormality determination counter for each page number. When there is a sheet determined to be abnormal by the image inspection apparatus 3, "1" is added to the abnormality determination counter for the page number of that sheet. Accordingly, the control unit 10 can grasp the page number and the number of pages determined to be abnormal.

The display unit 14 is one specific example of a notifier according to the present invention. The display unit 14 constituted by a liquid crystal panel or the like and displays, based on a display signal supplied from the control unit 10, the operation contents and setting information by the user, information on a sheet determined to be abnormal in the inspection by the image inspection apparatus 3 (e.g., the number of pages, the number of copies (which copy), and the like.

Note that the display unit and the operator according to the present invention may be integrally constituted. That is, an operation display unit may be constituted by the display unit constituted by a liquid crystal panel or the like and the operator constituted by a touch sensor or the like.

Based on the control by the control unit 10, the conveyance unit 17 drives a conveyance roller (not shown) provided on a conveyance path to convey a sheet.

The image former 15 has a developing unit and an intermediate belt. The developing unit forms a toner image of each of CMYK colors, and the intermediate belt is rotated by a roller and functions as an intermediate transfer body for transferring each of the toner images formed by the developing unit onto a sheet. The image former 15 also has a secondary transfer roller that transfers each of the toner images (images) formed on the intermediate belt onto the sheet.

The fixing unit 16 is disposed on the downstream side of the image former 15 in the sheet conveyance direction and performs fixing processing on the sheet on which the toner images (images) have been formed and which is supplied from the image former 15. The fixing unit 16 fixes the images transferred onto the sheet by heating and pressurizing the conveyed sheet. The sheet on which the images have been fixed by the fixing unit 16 is conveyed to the image inspection apparatus 3 by the conveyance unit 17.

The control unit 10 controls the conveyance unit 17 to convey a sheet to the image former 15, the fixing unit 16, the image inspection apparatus 3, and the like. Moreover, the control unit 10 outputs the image data for printing, which has been created by the input image processing unit 104, to the image former 15. Furthermore, the control unit 10 controls the image former 15 to form an image on a sheet. Further, the control unit 10 controls the fixing unit 16 to fix the image on the sheet.

The image inspection apparatus 3 includes an inspection unit 20, a reading unit 21, a storage unit 22, a normal paper output tray 23, and an abnormal paper output tray 24. The normal paper output tray 23 is one specific example of a normal paper outputter according to the present invention, and the abnormal paper output tray 24 is one specific example of an abnormal paper outputter according to the present invention.

The reading unit 21 reads images formed on the front and back surfaces of the sheet conveyed from the image forming apparatus 2. The images read by the reading unit 21 are saved in a RAM 203 of the inspection unit 20 as read images. Note that the read images may be saved in the storage unit 22.

The inspection unit 20 is one specific example of an image inspection unit according to the present invention and includes a CPU 201, a ROM 202, the RAM 203, a read image analyzing unit 204, a file generation unit 205 and a paper output destination selection unit 206. The CPU 201 controls each unit constituting the image inspection apparatus 3 by reading out a program saved in the ROM 202. The ROM 202 saves a program executed by the CPU 201 of the inspection unit 20, data used when the program is executed, and the like.

In the RAM 203, variables, parameters, and the like generated during the arithmetic processing of the CPU 201 are temporarily written. As described above, besides the read images, the RAM 203 also saves a reference image obtained in advance by the reading unit 21 reading an image which is used as a reference. The RAM 203 also saves the analysis result of the read image analyzing unit 204.

By executing, with the CPU201, a program read out from the ROM 202, the respective functions of the read image analyzing unit 204, the file generation unit 205 and the paper output destination selection unit 206 are realized. The read image analyzing unit 204 compares, for each page, the read image read out from the RAM 203 with the reference image saved in advance in the RAM 203. If there is no difference between the read image and the reference image, the read image analyzing unit 204 determines that the read image is normal.

The read image analyzing unit 204 also analyzes the read image to detect normality or abnormality in the read image. For example, when a spot or the like is attached to an image printed on a certain page, a read image of this page is different from the reference image. Accordingly, if there is a difference between the read image and the reference image by comparison, the read image analyzing unit 204 determines that the read image is abnormal.

Furthermore, also in a case where the sheet itself is abnormal (e.g., torn, folded, spotted or the like), the read image analyzing unit 204 determines that the read image is abnormal if there is a difference between the read image and the reference image by comparison. Then, the read image analyzing unit 204 records in the RAM 203 as the analysis result that the read image on this page has been determined to be abnormal due to the difference.

The analysis result is information including, for example, the position and size of the spot, the page number where the abnormality has occurred, and the like, which are factors that the read image has been determined to be abnormal. Further, when the read image has been determined to be normal, information including the page number determined to be normal and the like is also recorded as the analysis result. Moreover, the read image analyzing unit 204 instructs the image forming apparatus 2 through a communication I/F unit (not shown) to perform reprinting processing (called "recovery processing") on a page for the read image determined to be abnormal. The image forming apparatus 2 instructed to perform the recovery processing again forms an image corresponding to the read image in which the abnormality has been detected by the read image analyzing unit 204.

Based on the analysis result of the read image analyzing unit 204, the file generation unit 205 generates a normal image file including a read image in which no abnormality has been detected and an abnormal image file including a read image in which an abnormality has been detected. Then, the file generation unit 205 generates an analysis result file which includes either the normal image file or the abnormal image file or both the normal image file and the abnormal image file.

The paper output destination selection unit 206 selects a paper output tray (one example of a paper output destination) for the sheet after the analysis, in accordance with the analysis result of the read image analyzing unit 204. For example, when the analysis result of the read image analyzing unit 204 indicates that the image formed on the sheet is normal, this sheet is a normal sheet. Therefore, the paper output destination selection unit 206 causes the normal sheet to be discharged to the normal paper output tray 23.

On the other hand, when the analysis result of the read image analyzing unit 204 indicates that the image formed on the sheet is abnormal, this sheet is an abnormal sheet. Therefore, the paper output destination selection unit 206 causes the abnormal sheet to be discharged to the abnormal paper output tray 24. Note that the abnormal paper output tray 24 is sometimes called a purge tray.

The storage unit 22 is constituted by a large-capacity HDD or the like. Therefore, the storage unit 22 stores the normal image file and the abnormal image file generated by the file generation unit 205. The normal image file and the abnormal image file are also collected into one analysis result file. Then, the inspection unit 20 reads out the analysis result file from the storage unit 22 as necessary and uses the analysis result file for the analysis by the read image analyzing unit 204. Furthermore, the inspection unit 20 transmits the analysis result file to the image forming apparatus 2 as necessary.

Herein, the application of the normal image file and the abnormal image file will be described.

### (1) Application of Normal Image File

The normal image file is used as evidence indicating that a normal sheet has been created. For example, even when some normal sheets are missing or spotted after the normal sheets are taken out from the normal paper output tray 23, it is possible to confirm that the normal sheets have been created with the correct number of pages by the user checking the contents of the normal image file.

### (2) Application of Abnormal Image File

The abnormal image file is used to show to the user which number of copies (which copy), which page, and which position the image determined to be abnormal by the read image analyzing unit 204 has occurred. Further, information obtained from the abnormal image file (which number of copies (which copy) and which page) is sent to the image forming apparatus 2 through the communication I/F unit (not shown).

Moreover, in the present embodiment, there may be a case where the user determines that the abnormal sheet discharged to the abnormal paper output tray 24 is utilizable (usable) and inputs through the operator 13 that this abnormal sheet is utilized. In short, even when the inspection unit 20 has determined that there is an abnormality but the user has determined that the abnormality is not a problem and the sheet can be used, this abnormal sheet is utilized. In this case, the inspection unit 20 takes out the read image for the abnormal sheet determined to be utilized from the abnormal image file and saves the read image in the RAM 203 as a utilizable image.

When the read image on the same page as the abnormal sheet determined to be utilized has been determined to be abnormal, the read image analyzing unit 204 compares the read image on that sheet with the above-described utilizable image. Then, when there is no difference between the read image and the utilizable image, the read image analyzing unit 204 determines that the read image determined to be abnormal is normal. Accordingly, it is possible to prevent the abnormality once determined to be utilizable by the user from being determined as an abnormality in the next inspection.

### [Image Forming Processing]

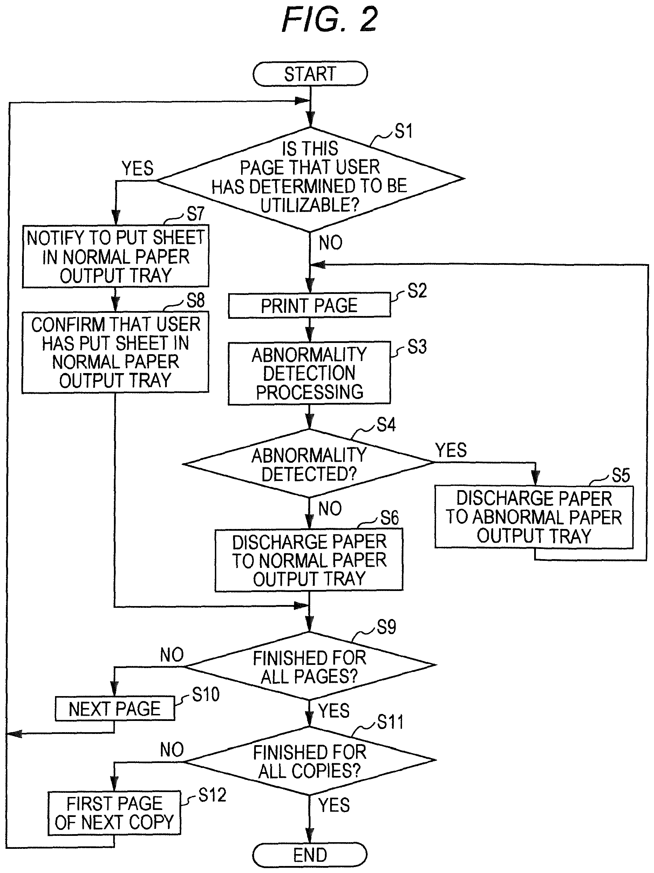

Next, a flow of the image forming processing by the image forming system 1 according to the present embodiment will be described with reference to Fig. 2.

Fig. 2 is a flowchart showing the flow of the image forming processing by the image forming system 1.

First, when the image forming processing is started, the control unit 10 of the image forming apparatus 2 determines whether or not the page on which an image is formed (printed) is the same page of the sheet that the user has determined to be utilizable (S1). Whether or not the page is the same page of the sheet determined to be utilizable is determined by referring to the utilizable page counter in the RAM 103. That is, when the value of the corresponding utilizable page counter is "1 " or more, the page is determined to be the same page of the sheet that the user has determined to be utilizable. When the value of the corresponding utilizable page counter is "0," the page is determined to be not the same page of the sheet that the user has determined to be utilizable.

When the page has been determined in S1 to be not the same page of the sheet that the user has determined to be utilizable (No in S1), the control unit 10 causes printing (image formation) of the page to be executed (S2). Next, the inspection unit 20 of the image inspection apparatus 3 performs abnormality detection processing (S3). In this processing, it is determined whether the image formed (printed) on the sheet conveyed from the image forming apparatus 2 is normal or abnormal.

Next, the inspection unit 20 determines whether or not an abnormality has been detected in the abnormality detection processing in S3 (S4). When it has been determined in S4 that an abnormality has been detected (Yes in S4), the inspection unit 20 causes the sheet, in which the abnormality has been detected (which has been determined to be abnormal), to be discharged to the abnormal paper output tray 24 (S5).

After the processing in S5, the control unit 10 performs the processing in S2. That is, in response to the recovery processing instructed from the image inspection apparatus 3, the control unit 10 again executes the formation (printing) of the image in which the abnormality has been detected (which has been determined to be abnormal).

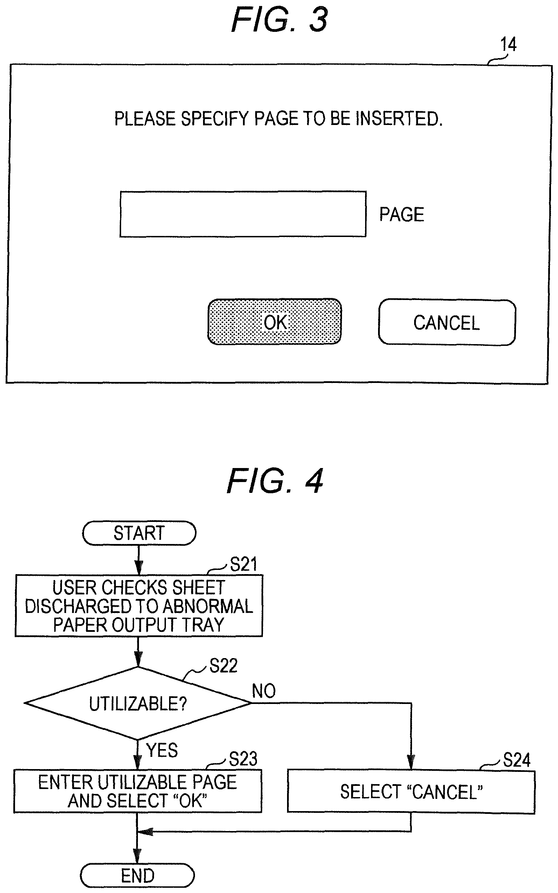

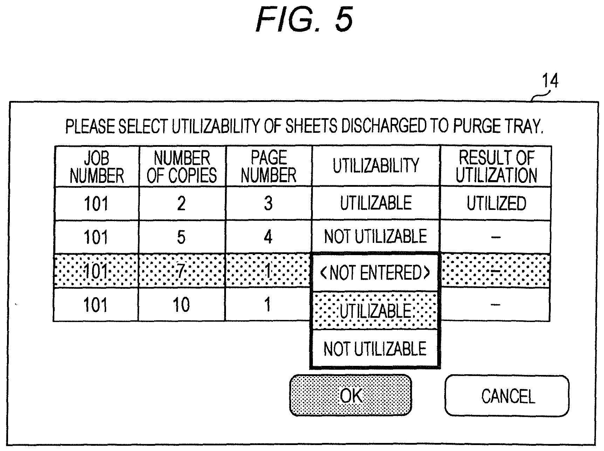

Furthermore, after the processing in S5, the control unit 10 displays on the display unit 14 a first example (see Fig. 3) or a second example (see Fig. 5) of the input screen for accepting a determination result of a user. The user confirms the input screen displayed on the display unit 14, performs a first example or a second example of user determination described later, and enters a determination result through the operator 13. Further, after the processing in S5, the control unit 10 may transmit abnormality detection information to the PC (not shown) that has transmitted the print job instructing the current image formation. The abnormality detection information includes, for example, the page number of the page determined to be abnormal and the number of copies (which copy).

When it has been determined in S4 that no abnormality has been detected (No in S4), the inspection unit 20 causes the sheet, in which no abnormality has been detected (which has been determined to be normal), to be discharged to the normal paper output tray 23 (S6).

On the other hand, when the page has been determined in S1 to be the same page of the sheet that the user has determined to be utilizable (Yes in S1), the control unit 10 uses the display unit 14 to notify to put, in the normal paper output tray 23, the sheet determined to be utilizable (S7). At this time, the control unit 10 does not execute (cancels) printing (image formation) of the same page of the sheet that the user has determined to be utilizable. That is, the processing in S2 is not performed.

Next, the control unit 10 confirms that the user has put in the normal paper output tray 23 the sheet determined to be utilizable (S8). The user puts in the normal paper output tray 23 the sheet determined to be utilizable and then performs, by using the operator 13, input indicating that the sheet determined to be utilizable has been put. Accordingly, the control unit 10 can confirm that the user has put in the normal paper output tray 23 the sheet determined to be utilizable.

Thus, the user puts in the normal paper output tray 23 the sheet determined to be utilizable so that the sheet determined to be utilizable can be inserted into normal sheets discharged onto the normal paper output tray 23. As a result, it is possible to avoid wasting a sheet that has been determined to be abnormal by the image inspection apparatus 3 but has been judged to have no problem when the user checks the sheet.

After the processing in S6 or S8, the control unit 10 determines whether or not the image formation (printing) has been finished for all the pages in the current copy (e.g., the second copy) (S9). When it has been determined in S9 that the image formation (printing) has not been finished for all the pages (No in S9), the control unit 10 prepares image formation for the next page (S10). After the processing in S10, the control unit 10 performs the processing in S1.

When it has been determined in S9 that the image formation (printing) has been finished for all the pages (Yes in S9), the control unit 10 determines whether or not the image formation (printing) has been finished for all the copies (last copy) (S11). When it has been determined in S11 that the image formation (printing) has not been finished for all the copies (last copy) (No in S11), the control unit 10 prepares image formation for the first page of the next copy (S12).

After the processing in S12, the control unit 10 performs the processing in S1. On the other hand, when it has been determined in S11 that the image formation (printing) has been finished for all the copies (last copy) (Yes in S11), the control unit 10 ends the image forming processing.

### [First Example of User Determination]

Next, the first example of the user determination according to the present embodiment will be described with reference to Figs. 3 and 4.

Fig. 3 is a view showing a first example of an input screen displayed for entering a determination result of the user determination. Fig. 4 is a flowchart showing the first example of the user determination.

When the sheet determined to be abnormal by the image inspection apparatus 3 is discharged to the abnormal paper output tray 24, the user determines whether or not the image abnormality on the sheet is at an acceptable level of abnormality. At this time, the control unit 10 causes the display unit 14 to display an input screen for entering the determination result of the user. The user enters necessary instructions through the operator 13 in accordance with the display of that input screen.

The first example of the input screen displays a field for entering the page number of the sheet as shown in Fig. 3 when the sheet discharged to the abnormal paper output tray 24 has been determined to be utilized. The first example of the input screen also displays "CANCEL" and "OK."

After the page number of the sheet determined to be utilizable is entered, and then the "OK" display is selected, the page number of the sheet, which has been determined to be abnormal but is utilized, is decided. Accordingly, the control unit 10 adds "1" to the corresponding utilizable page counter in the RAM 103. On the other hand, when the "CANCEL" display is selected, the sheet determined to be abnormal is decided to be not utilized.

To perform the user determination as shown in Fig. 4, the user checks the sheet discharged to the abnormal paper output tray 24 (S21). Next, the user determines whether or not the sheet discharged to the abnormal paper output tray 24 is utilizable (S22). That is, it is determined whether or not the sheet discharged to the abnormal paper output tray 24 can be used together with a sheet discharged to the normal paper output tray 23.

When the sheet discharged to the abnormal paper output tray 24 has been determined to be utilizable in S22 (Yes in S22), the user enters, into the field for entering the page number of the sheet, the page number of the sheet determined to be utilizable and selects "OK" (S23). Accordingly, the page number of the sheet utilized is decided. After the processing in S23, the user ends the first example of the user determination.

On the other hand, when the sheet discharged to the abnormal paper output tray 24 has been determined to be not utilizable in S22 (No in S22), the user selects "CANCEL" (S24). Accordingly, the sheet determined to be abnormal is decided to be not utilized. Note that, by selecting "CANCEL" although the page number has been entered into the field for entering the page number of the sheet, the page number is deleted, and the sheet determined to be abnormal is decided to be not utilized. After the processing in S24, the user ends the first example of the user determination.

### [Second Example of User Determination]

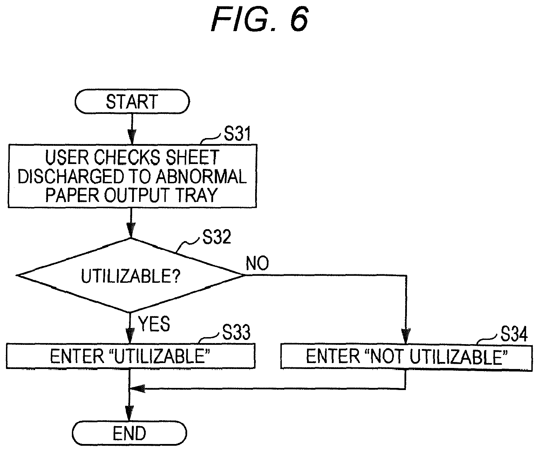

Next, the second example of the user determination according to the present embodiment will be described with reference to Figs. 5 and 6.

Fig. 5 is a view showing the second example of the input screen displayed for entering the determination results of the user determination. Fig. 6 is a flowchart showing the second example of the user determination.

The second example of the input screen displays the job number, the number of copies (which copy), the page number, the utilizability and the result of the utilization as shown in Fig. 5. The second example of the input screen also displays "CANCEL" and "OK."

The job number is, for example, a number associated with each print job instructing image formation. The number of copies indicates which number of copies out of the total number of copies designated in the print job. The page number indicates the page number of the sheet determined to be abnormal.

A cell for the utilizability displays "UTILIZABLE" or "NOT UTILIZABLE" from a pull-down menu. When the "UTILIZABLE" display is selected in the cell for the utilizability, the sheet of the corresponding page number is decided to be utilized. On the other hand, when the "NOT UTILIZABLE" display is selected in a cell for the utilizability, the sheet of the corresponding page number is decided to be not utilized.

The result of the utilization indicates whether or not the sheet that has been determined to be abnormal but is utilized has been inserted into normal sheets discharged onto the normal paper output tray 23. When the sheet has been decided to be not utilized, a cell for the result of the utilization displays "-". Moreover, a cell for the result of the utilization displays "-" when the sheet has been decided to be utilized but is not still inserted into the normal sheets discharged onto the normal paper output tray 23. Note that a cell for the result of the utilization may display "NOT UTILIZED" in this case.

When a sheet that has been determined to be abnormal but is utilized has been inserted into the normal sheets discharged onto the normal paper output tray 23, "UTILIZED" is displayed in a cell for the result of the utilization. By displaying the second example of such an input screen, the user can easily confirm the page number, the utilizability and the result of the utilization even when there are a plurality of sheets determined to be abnormal.

When the "OK" display is selected, the final decision is made to the entry of "UTILIZABLE" or "NOT UTILIZABLE" selected so far, and the control unit 10 adds "1" to the corresponding utilizable page counter in the RAM 103. On the other hand, when the "CANCEL" display is selected, the setting of "UTILIZABLE" or "NOT UTILIZABLE" is canceled.

To perform the user determination as shown in Fig. 6, the user checks the sheet discharged to the abnormal paper output tray 24 (S31). Next, the user determines whether or not the sheet discharged to the abnormal paper output tray 24 is utilizable (S32). That is, it is determined whether or not the sheet discharged to the abnormal paper output tray 24 can be used together with a sheet discharged to the normal paper output tray 23.

When the sheet discharged to the abnormal paper output tray 24 has been determined to be utilizable in S32 (Yes in S32), the user enters "UTILIZABLE" in a cell for the utilizability and selects "OK" (S33). Accordingly, the sheet of the corresponding page number is decided to be utilized. After the processing in S33, the user ends the second example of the user determination.

On the other hand, when the sheet discharged to the abnormal paper output tray 24 has been determined to be not utilizable in S32 (No in S32), the user enters "NOT UTILIZABLE" in a cell for the utilizability and selects "OK" (S34). Accordingly, the sheet of the corresponding page number is decided to be not utilized. After the processing in S34, the user ends the second example of the user determination.

### [Possible Time for Determination by User]

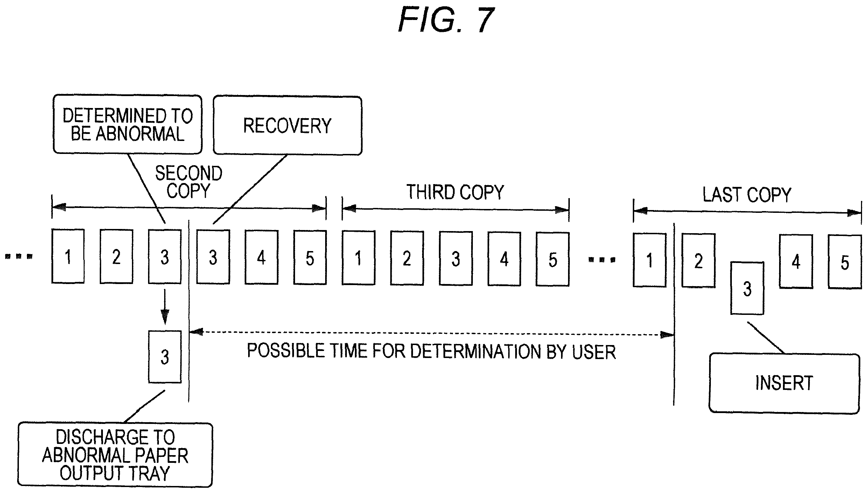

Next, a possible time for the determination by the user will be described with reference to Fig. 7.

Fig. 7 is a diagram for explaining the possible time for the determination by the user.

When a sheet determined to be abnormal by the image inspection apparatus 3 has been discharged to the abnormal paper output tray 24, the recovery processing is performed so that the image formation is continued. Therefore, if the utilizability of the sheet determined to be abnormal is not determined before a predetermined period of time elapses after the sheet determined to be abnormal has been discharged, the opportunity of utilizing the sheet determined to be abnormal will be lost. In the present embodiment, this predetermined period of time is called a possible time for the determination by the user.

As shown in Fig. 7, for example, suppose that the sheet of the third page in the second copy of a certain print job has been determined to be abnormal. When the third page is not determined to be abnormal after this, the third page of the last copy can be replaced with the sheet determined to be abnormal by entering, before the image formation of the third page of the last copy is started, that the sheet determined to be abnormal is utilized. Therefore, the possible time for the determination by the user is from when the sheet of the third page in the second copy has been discharged to the abnormal paper output tray 24 until when the image formation of the third page in the last copy is started.

Note that the possible time for the determination by the user in the above case is set in the present embodiment to be from when the sheet of the third page in the second copy has been discharged to the abnormal paper output tray 24 until when the image formation of the second page in the last copy is started. Accordingly, the image formation of the third page in the last copy can be securely canceled, and the image formation (printing) and the sheet can be prevented from being wasted.

Moreover, when the sheets of the third page in the second and third copies have been determined to be abnormal, the possible time for the determination by the user is from when the sheet of the third page in the second copy has been discharged to the abnormal paper output tray 24 until when the image formation of the third page in the second last copy is started. That is, the possible time for the determination by the user is before the image formation of the page the same as the page determined to be abnormal is started in the number of copies obtained by subtracting the number of sheets of the same page determined to be abnormal from the last number of copy.

Furthermore, sheets of different pages may be each determined to be abnormal in some cases. In this case, the possible time for the determination by the user is before the image formation of the page the same as the page determined to be abnormal most frequently is started in the number of copies obtained by subtracting the number of sheets determined to be abnormal most frequently (the maximum value among the values of the abnormal determination counters) from the last number of copy.

In the present embodiment, the image formation (printing) canceled when the user does not enter the determination of the utilizability within the possible time for the determination by the user. Accordingly, the opportunity of utilizing the sheet determined to be abnormal will not be lost, and the image formation (printing) and the sheet can be prevented from being wasted.

Note that the possible time for the determination by the user can be set as appropriate as long as the possible time is before the image formation of the page the same as the page of the sheet desired to be utilized is started. The possible time for the determination by the user may be set, for example, before the image formation of the first page is started in the number of copies obtained by subtracting the number of sheets determined to be abnormal most frequently (the maximum value among the values of the abnormal determination counters) from the last number of copy.

### 2. Second Embodiment

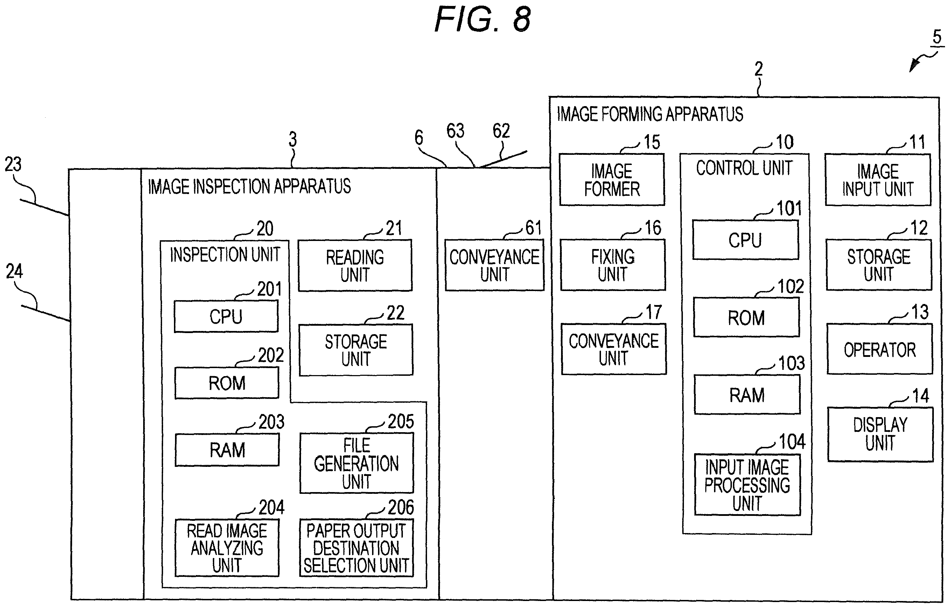

Next, an image forming system according to a second embodiment of the present invention will be described with reference to Figs. 8 to 11.

### [Configuration of Image Forming System]

Fig. 8 is a schematic configuration diagram showing a configuration example of the image forming system according to the second embodiment of the present invention.

An image forming system 5 according to the second embodiment shown in Fig. 8 has the same configuration as that of the aforementioned image forming system 1 according to the first embodiment, except that the image forming system 5 according to the second embodiment includes a post processing apparatus. Therefore, the post processing apparatus of the image forming system 5 according to the second embodiment will be described herein, and the description of the parts of the image forming system 5 according to the second embodiment in common with those of the first embodiment will be omitted.

As shown in Fig. 8, the image forming system 5 includes an image forming apparatus 2, an image inspection apparatus 3 and a post processing apparatus 6. The post processing apparatus 6 is disposed between the image forming apparatus 2 and the image inspection apparatus 3. That is, the post processing apparatus 6 is disposed before the image inspection apparatus 3.

The post processing apparatus 6 includes a conveyance unit 61, a post inserter (PI) tray 62 and a sheet inserter 63. In the PI tray 62, a sheet, which has been discharged to an abnormal paper output tray 24 and determined to be utilizable by a user, is placed. The sheet placed in the PI tray 62 is inserted into the sheet inserter 63.

Based on the control by a control unit 10, the conveyance unit 61 drives a conveyance roller (not shown) provided on a conveyance path to convey a sheet. This conveyance unit 61 conveys, to the image inspection apparatus 3, a sheet discharged from the image forming apparatus 2 (a sheet on which an image is formed) and a sheet inserted from the sheet inserter 63.

When the image formation (printing) is canceled for the page that the user has determined to be utilizable, the control unit 10 causes the sheet placed in the PI tray 62 to be inserted into the sheet inserter 63 and causes the conveyance unit 61 to convey that sheet to the image inspection apparatus 3.

### [Image Forming Processing]

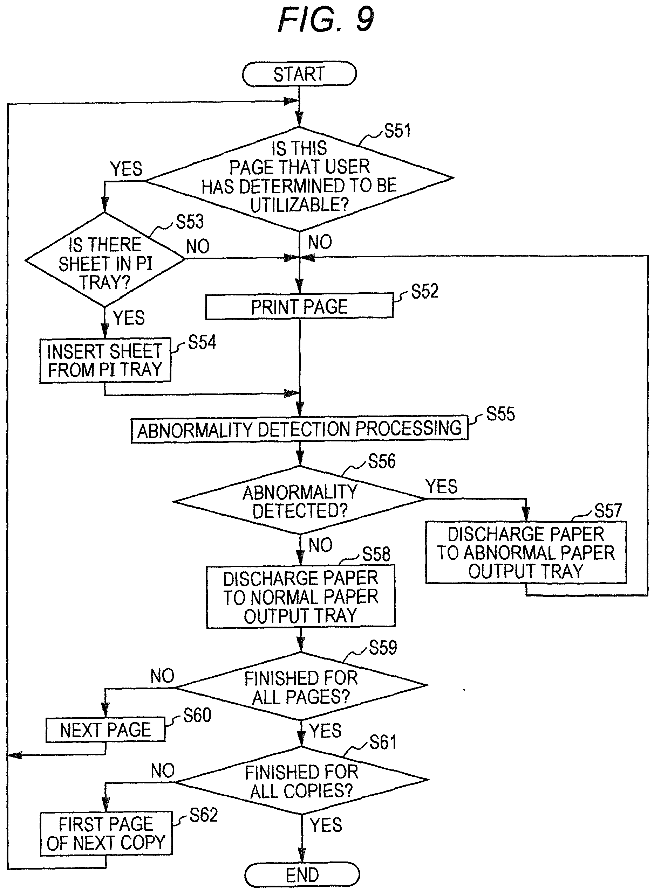

Next, a flow of the image forming processing by the image forming system 5 according to the present embodiment will be described with reference to Fig. 9.

Fig. 9 is a flowchart showing the flow of the image forming processing by the image forming system 5.

First, when the image forming processing is started, the control unit 10 of the image forming apparatus 2 determines whether or not the page on which the image is formed (printed) is the same page of the sheet that the user has determined to be utilizable (S51). When the page has been determined in S51 to be not the same page of the sheet that the user has determined to be utilizable (No in S51), the control unit 10 causes printing (image formation) of the page to be executed (S52).

On the other hand, when the page has been determined in S51 to be the same page of the sheet that the user has determined to be utilizable (Yes in S51), the control unit 10 determines whether or not there is a sheet in the PI tray 62 (S53). When it has been determined in S53 that there is no sheet in the PI tray 62 (No in S53), the control unit 10 performs the processing in S52.

When it has been determined in S53 that there is a sheet in the PI tray 62 (Yes in S53), the control unit 10 causes the sheet in the PI tray 62 to be inserted into the sheet inserter 63 and conveyed to the image inspection apparatus 3 (S54). At this time, the control unit 10 does not execute (cancels) printing (image formation) of the same page of the sheet that the user has determined to be utilizable. That is, the processing in S52 is not performed.

After the processing in S52 or S54, an inspection unit 20 of the image inspection apparatus 3 performs abnormality detection processing (S55). In this processing, it is determined whether the image formed (printed) on the sheet conveyed from the image forming apparatus 2 or the image formed (printed) on the sheet that is placed in the PI tray 62 and determined to be utilizable by the user is normal or abnormal.

When the abnormality detection processing is performed on the sheet that the user has determined to be utilizable, the inspection unit 20 does not determine that there is an abnormality even when the abnormality determined to be utilizable by the user is detected, but determines that there is an abnormality when a different abnormality has been detected. For example, the inspection unit 20 determines that there is an abnormality when a sheet inserted into the sheet inserter 63 is spotted during conveyance.

Moreover, when the abnormality detection processing is performed on the sheet that the user has determined to be utilizable, the inspection unit 20 determines that there is an abnormality when the inserted sheet is not the page (the page scheduled to be printed by the processing in S52) on which the current image is formed. That is, the inspection unit 20 determines that there is an abnormality when an incorrect sheet is placed in the PI tray 62.

Next, the inspection unit 20 determines whether or not an abnormality has been detected in the abnormality detection processing in S55 (S56). When it has been determined in S56 that an abnormality has been detected (Yes in S56), the inspection unit 20 causes the sheet, in which the abnormality has been detected (which has been determined to be abnormal), to be discharged to the abnormal paper output tray 24 (S57).

After the processing in S57, the control unit 10 performs the processing in S52. That is, in response to the recovery processing instructed from the image inspection apparatus 3, the control unit 10 again executes the formation (printing) of the image in which the abnormality has been detected (which has been determined to be abnormal).

Furthermore, after the processing in S57, the control unit 10 displays on a display unit 14 the second example (see Fig. 5) of the input screen for accepting the determination result of the user. The user confirms the input screen displayed on the display unit 14, performs a third example of the user determination described later, and enters the determination result through an operator 13. Further, after the processing in S57, the control unit 10 may transmit abnormality detection information to a PC (not shown) that has transmitted the print job instructing the current image formation. The abnormality detection information includes, for example, the page number of the page determined to be abnormal and the number of copies (which copy).

When it has been determined in S56 that no abnormality has been detected (No in S56), the inspection unit 20 causes the sheet, in which no abnormality has been detected (which has been determined to be normal), to be discharged to a normal paper output tray 23 (S58).

Thus, the user puts in the PI tray 62 the sheet determined to be utilizable so that the sheet determined to be utilizable can be inserted into normal sheets discharged onto the normal paper output tray 23. As a result, it is possible to avoid wasting a sheet that has been determined to be abnormal by the image inspection apparatus 3 but has been judged to have no problem when the user checks the sheet.

Next, the control unit 10 determines whether or not the image formation (printing) has been finished for all the pages in the current copy (e.g., the second copy) (S59). When it has been determined in S59 that the image formation (printing) has not been finished for all the pages (No in S59), the control unit 10 prepares image formation for the next page (S60). After the processing in S60, the control unit 10 performs the processing in S51.

When it has been determined in S59 that the image formation (printing) has been finished for all the pages (Yes in S59), the control unit 10 determines whether or not the image formation (printing) has been finished for all the copies (last copy) (S61). When it has been determined in S61 that the image formation (printing) has not been finished for all the copies (last copy) (No in S61), the control unit 10 prepares image formation for the first page of the next copy (S62).

After the processing in S62, the control unit 10 performs the processing in S51. On the other hand, when it has been determined in S61 that the image formation (printing) has been finished for all the copies (last copy) (Yes in S61), the control unit 10 ends the image forming processing.

### [Third example of User Determination]

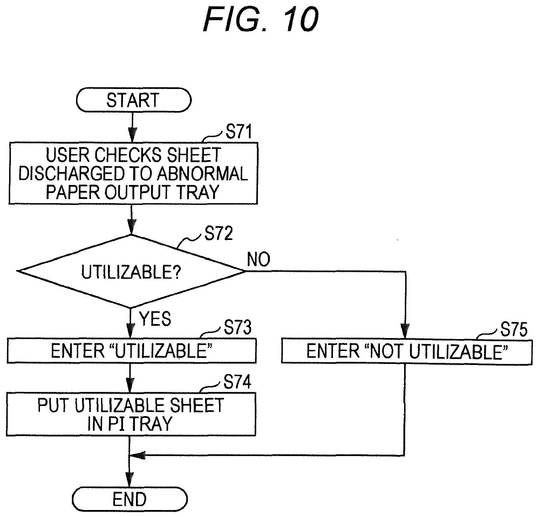

Next, the third example of the user determination according to the present embodiment will be described with reference to Fig. 10.

Fig. 10 is a flowchart showing the third example of the user determination.

In the third example of the user determination, the second example (see Fig. 5) of the aforementioned input screen is displayed on the display unit 14. To perform the third example of the user determination, the user checks the sheet discharged to the abnormal paper output tray 24 (S71). Next, the user determines whether or not the sheet discharged to the abnormal paper output tray 24 is utilizable (S72). That is, it is determined whether or not the sheet discharged to the abnormal paper output tray 24 can be used together with a sheet discharged to the normal paper output tray 23.

When the sheet discharged to the abnormal paper output tray 24 has been determined to be utilizable in S72 (Yes in S72), the user enters "UTILIZABLE" in a cell for utilizability and selects "OK" (S73). Accordingly, the sheet of the corresponding page number is decided to be utilized. After the processing in S73, the user puts in the PI tray 62 the sheet determined to be utilizable (S74). After the processing in S74, the user ends the third example of the user determination.

On the other hand, when the sheet discharged to the abnormal paper output tray 24 has been determined to be not utilizable in S72 (No in S72), the user enters "NOT UTILIZABLE" in a cell for the utilizability and selects "OK" (S75). Accordingly, the sheet of the corresponding page number is decided to be not utilized. After the processing in S75, the user ends the third example of the user determination.

### [Sheet Rearrangement Notification]

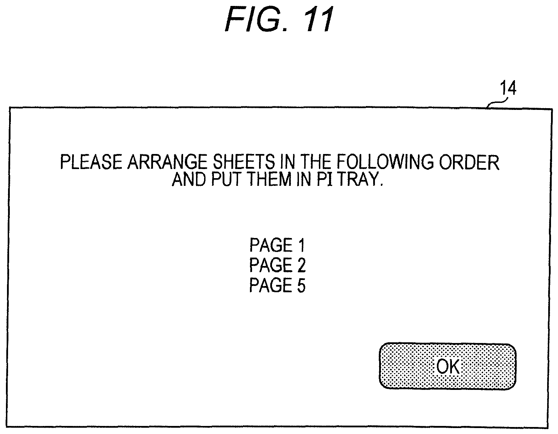

Next, rearrangement of a plurality of sheets determined to be utilizable will be described with reference to Fig. 11.

Fig. 11 is a view showing a screen for notifying that the order of a plurality of sheets determined to be utilizable is rearranged.

For example, in a case where the second example (see Fig. 5) of the input screen is displayed and the third example of the user determination (see Fig. 10) is performed, it is necessary to notify the user of the arrangement order of a plurality of sheets put in the PI tray 62 when a plurality of pages determined to be utilizable are selected. Therefore, in the present embodiment, a sheet arrangement order notification screen shown in Fig. 11 is displayed on the display unit 14 when a plurality of pages determined to be utilizable in the third example of the user determination are selected.

As shown in Fig. 11, the sheet arrangement order notification screen displays the pages of the sheets determined to be utilizable in the arrangement order. The sheet arrangement order notification screen also displays "OK". The sheet arrangement order notification screen shown in Fig. 11 displays "page 1", "page 2" and "page 5" in this order from the top. The user who has confirmed the sheet arrangement order notification screen puts the sheets, which have been determined to be utilizable, in the order of "page 1", "page 2" and "page 5" on top of one another from the bottom in the PI tray 62. Thereafter, the user selects "OK".

The control unit 10 decides the arrangement order of the sheets in accordance with the timing when the plurality of pages determined to be utilizable in the third example of the user determination are selected, and causes the display unit 14 to display the decided arrangement order. For example, when the sheets of "page 1", "page 2" and "page 5" are determined to be utilizable while the image formation for the page 3 is being performed, "page 5", "page 1" and "page 2" are displayed in this order from the top in the sheet arrangement order notification screen.

Note that the sheet arrangement order notification screen according to the present invention is not limited to the example shown in Fig. 11, and, for example, the arrangement order of the sheets may be expressed by using views obtained by copying the sheets. Further, with the sheet arrangement order notification screen according to the present invention, the sheets put in the PI tray 62 may be designated one by one to select "OK" each time one sheet is put in.

### 3. Third Embodiment

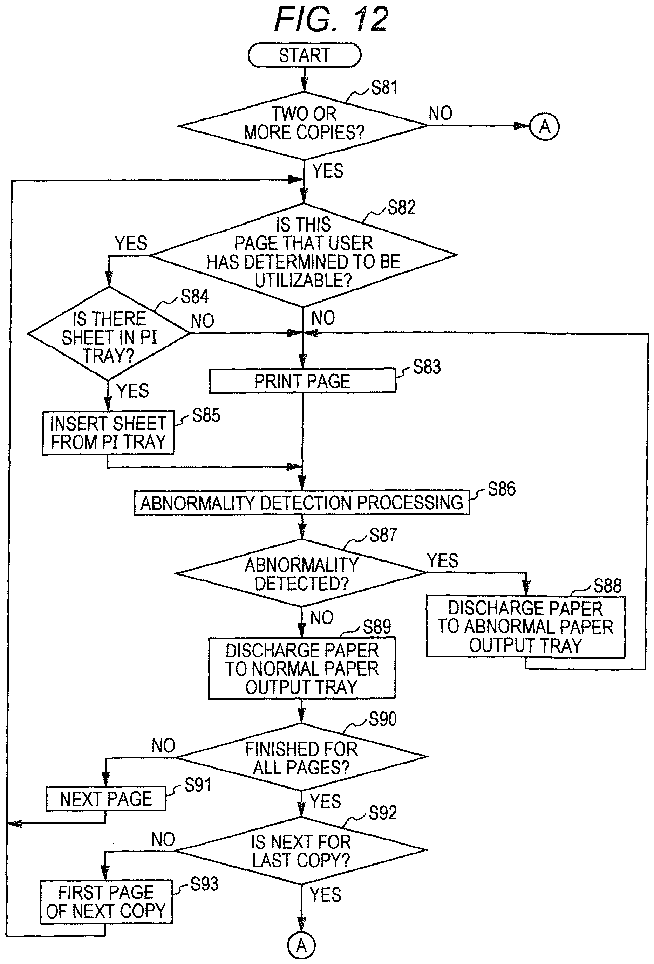

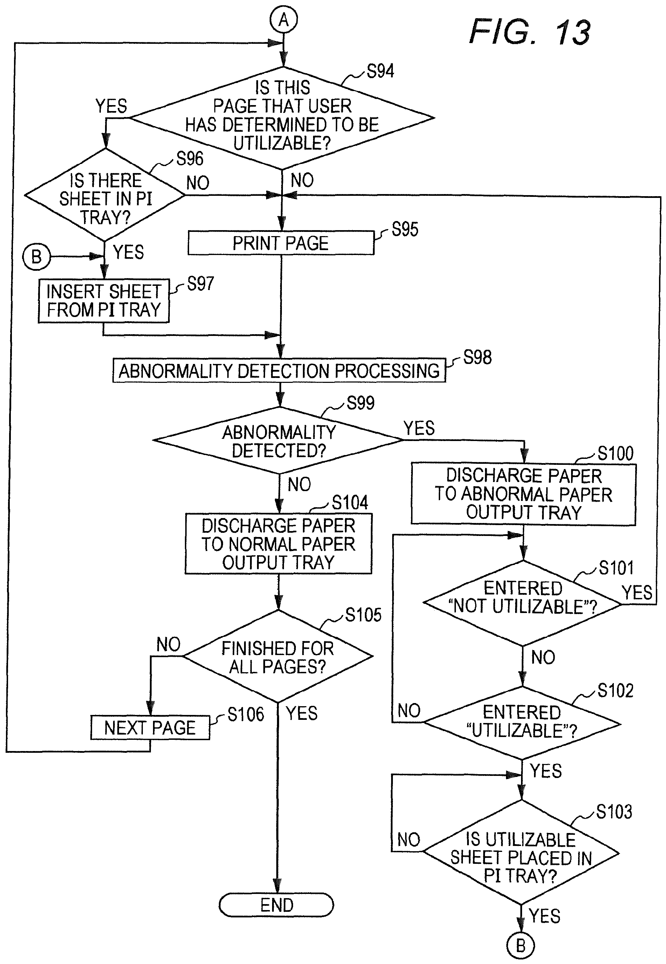

Next, an image forming system according to a third embodiment of the present invention will be described with reference to Figs. 12 and 13.

The image forming system according to the third embodiment has the same configuration as that of the aforementioned image forming system 5 according to the second embodiment, except for the image forming processing thereof. Therefore, the image forming processing of the image forming system according to the third embodiment will be described herein, and the description of the parts of the image forming system according to the third embodiment in common with those of the second embodiment will be omitted.

### [Image Forming Processing]

Fig. 12 is a flowchart (part 1) showing a flow of the image forming processing according to the third embodiment. Fig. 13 is a flowchart (part 2) showing the flow of the image forming processing according to the third embodiment.

First, when the image forming processing is started, a control unit 10 of an image forming apparatus 2 determines whether or not the image formation (printing) by the current print job is for two or more copies (S81). When it has been determined in S81 that the image formation (printing) by the current print job is not for two or more copies (No in S81), the control unit 10 performs the processing in S94 described later.

On the other hand, when it has been determined in S81 that the image formation (printing) by the current print job is for two or more copies (Yes in S81), the control unit 10 determines whether or not the page on which the image is formed (printed) is the same page of the sheet that the user has determined to be utilizable (S82). When the page has been determined in S82 to be not the same page of the sheet that the user has determined to be utilizable (No in S82), the control unit 10 causes printing (image formation) of the page to be executed (S83).

On the other hand, when the page has been determined in S82 to be the same page of the sheet that the user has determined to be utilizable (Yes in S82), the control unit 10 determines whether or not there is a sheet in a PI tray 62 (S84). When it has been determined in S84 that there is no sheet in the PI tray 62 (No in S84), the control unit 10 performs the processing in S83.

When it has been determined in S84 that there is a sheet in the PI tray 62 (Yes in S84), the control unit 10 causes the sheet in the PI tray 62 to be inserted into a sheet inserter 63 and conveyed to an image inspection apparatus 3 (S85). At this time, the control unit 10 does not execute (cancels) printing (image formation) of the same page of the sheet that the user has determined to be utilizable. That is, the processing in S83 is not performed.

After the processing in S83 or S85, an inspection unit 20 of the image inspection apparatus 3 performs abnormality detection processing (S86). In this processing, it is determined whether the image formed (printed) on the sheet conveyed from the image forming apparatus 2 or the image formed (printed) on the sheet that is placed in the PI tray 62 and determined to be utilizable by the user is normal or abnormal.

When the abnormality detection processing is performed on the sheet that the user has determined to be utilizable, the inspection unit 20 does not determine that there is an abnormality even when the abnormality determined to be utilizable by the user is detected, but determines that there is an abnormality when a different abnormality has been detected.

Moreover, when the abnormality detection processing is performed on the sheet that the user has determined to be utilizable, the inspection unit 20 determines that there is an abnormality when the inserted sheet is not the page (the page scheduled to be printed by the processing in S83) on which the current image is formed. That is, the inspection unit 20 determines that there is an abnormality when an incorrect sheet is placed in the PI tray 62.

Next, the inspection unit 20 determines whether or not an abnormality has been detected in the abnormality detection processing in S86 (S87). When it has been determined in S87 that an abnormality has been detected (Yes in S87), the inspection unit 20 causes the sheet, in which the abnormality has been detected (which has been determined to be abnormal), to be discharged to an abnormal paper output tray 24 (S88).

After the processing in S88, the control unit 10 performs the processing in S83. That is, in response to the recovery processing instructed from the image inspection apparatus 3, the control unit 10 again executes the formation (printing) of the image in which the abnormality has been detected (which has been determined to be abnormal).

Furthermore, after the processing in S88, the control unit 10 displays on a display unit 14 the second example (see Fig. 5) of the input screen for accepting a determination result of a user. The user performs the third example of the aforementioned user determination and enters the determination result through an operator 13. Further, after the processing in S88, the control unit 10 may transmit abnormality detection information to a PC (not shown) that has transmitted the print job instructing the current image formation. The abnormality detection information includes, for example, the page number of the page determined to be abnormal and the number of copies (which copy).

When it has been determined in S87 that no abnormality has been detected (No in S87), the inspection unit 20 causes the sheet, in which no abnormality has been detected (which has been determined to be normal), to be discharged to a normal paper output tray 23 (S89).

Thus, the user puts in the PI tray 62 the sheet determined to be utilizable so that the sheet determined to be utilizable can be inserted into normal sheets discharged onto the normal paper output tray 23. As a result, it is possible to avoid wasting a sheet that has been determined to be abnormal by the image inspection apparatus 3 but has been judged to have no problem when the user checks the sheet.

Next, the control unit 10 determines whether or not the image formation (printing) has been finished for all the pages in the current copy (e.g., the second copy) (S90). When it has been determined in S90 that the image formation (printing) has not been finished for all the pages (No in S90), the control unit 10 prepares image formation for the next page (S91). After the processing in S91, the control unit 10 performs the processing in S82.

When it has been determined in S90 that the image formation (printing) has been finished for all the pages (Yes in S90), the control unit 10 determines whether or not the next image formation (printing) is for the last copy (S92). When it has been determined in S92 that the next image formation (printing) is not for the last copy (No in S92), the control unit 10 prepares image formation for the first page of the next copy (S93). After the processing in S93, the control unit 10 performs the processing in S82.

In a case of Yes in S92 or No in S81, the control unit 10 determines whether or not the page on which the image is formed (printed) is the same page of the sheet that the user has determined to be utilizable (S94). When the page has been determined in S94 to be not the same page of the sheet that the user has determined to be utilizable (No in S94), the control unit 10 causes printing (image formation) of the page to be executed (S95).

On the other hand, when the page has been determined in S94 to be the same page of the sheet that the user has determined to be utilizable (Yes in S94), the control unit 10 determines whether or not there is a sheet in the PI tray 62 (S96). When it has been determined in S96 that there is no sheet in the PI tray 62 (No in S96), the control unit 10 performs the processing in S95.

When it has been determined in S96 that there is a sheet in the PI tray 62 (Yes in S96), the control unit 10 causes the sheet in the PI tray 62 to be inserted into the sheet inserter 63 and conveyed to the image inspection apparatus 3 (S97). At this time, the control unit 1 0 does not execute (cancels) printing (image formation) of the same page of the sheet that the user has determined to be utilizable. That is, the processing in S95 is not performed.

After the processing in S95 or S97, the inspection unit 20 of the image inspection apparatus 3 performs abnormality detection processing (S98). In this processing, it is determined whether the image formed (printed) on the sheet conveyed from the image forming apparatus 2 or the image formed (printed) on the sheet that is placed in the PI tray 62 and determined to be utilizable by the user is normal or abnormal.

Next, the inspection unit 20 determines whether or not an abnormality has been detected in the abnormality detection processing in S98 (S99). When it has been determined in S99 that an abnormality has been detected (Yes in S99), the inspection unit 20 causes the sheet, in which the abnormality has been detected (which has been determined to be abnormal), to be discharged to the abnormal paper output tray 24 (S100).

Next, the control unit 10 displays on the display unit 14 the second example (see Fig. 5) of the input screen for accepting a determination result of the user and accepts the determination result of the user. Then, the control unit 10 determines whether or not "NOT UTILIZABLE" has been entered as the determination result of the user (S101). When it has been determined in S101 that "NOT UTILIZABLE" has been entered (Yes in S101), the control unit 10 performs the processing in S95.

Thus, when an abnormality has been detected in the sheet (which is determined to be abnormal) on which the image is formed in the last copy, the recovery processing is not performed immediately, but the determination result of the user is waited. Then, when "NOT UTILIZABLE" has been entered as the determination result of the user, the recovery processing is executed (the formation (printing) of the image in which the abnormality has been detected (which has been determined to be abnormal) is executed again). Therefore, only when it is necessary to form (print) the image in which an abnormality has been detected, the formation of that image is executed, and thereby it is possible to avoid wasting sheets.

On the other hand, when it has been determined in S101 that "NOT UTILIZABLE" is not entered (No in S101), the control unit 10 determines whether or not "UTILIZABLE" has been entered as the determination result of the user (S102). When it has been determined in S102 that "UTILIZABLE" is not entered (No in S102), the control unit 10 performs the processing in S101. That is, the control unit 10 waits until either "NOT UTILIZABLE" or "UTILIZABLE" is entered.

When it has been determined in S102 that "UTILIZABLE" has been entered (Yes in S102), the control unit 10 determines whether or not the utilizable sheet has been placed in the PI tray 62 (S103). When it has been determined in S103 that the utilizable sheet is not placed in the PI tray 62 (No in S103), the control unit 10 repeats the processing in S103. That is, the control unit 10 waits until the utilizable sheet is placed in the PI tray 62.

On the other hand, when it has been determined in S103 that the utilizable sheet has been placed in the PI tray 62 (Yes in S103), the control unit 10 performs the processing in S97. That is, the control unit 10 causes the sheet in the PI tray 62 to be inserted into the sheet inserter 63 and conveyed to the image inspection apparatus 3.

When it has been determined in S99 that no abnormality has been detected (No in S99), the inspection unit 20 causes the sheet, in which no abnormality has been detected (which has been determined to be normal), to be discharged to the normal paper output tray 23 (S104).

Next, the control unit 10 determines whether or not the image formation (printing) has been finished for all the pages in the current copy (last copy) (S105). When it has been determined in S105 that the image formation (printing) has not been finished for all the pages (No in S105), the control unit 10 prepares image formation for the next page (S106). After the processing in S106, the control unit 10 performs the processing in S94. On the other hand, when it has been determined in S105 that the image formation (printing) has been finished for all the pages (Yes in S105), the control unit 10 ends the image forming processing.

### 4. Fourth Embodiment

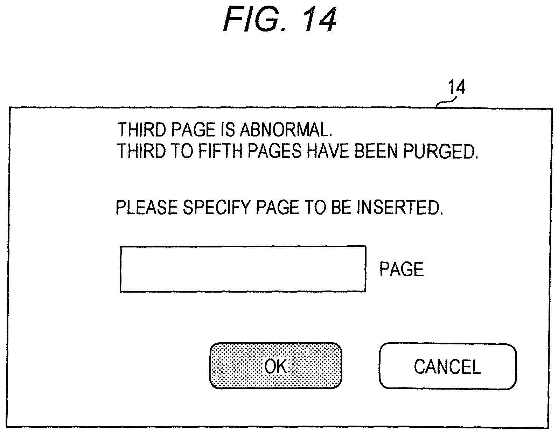

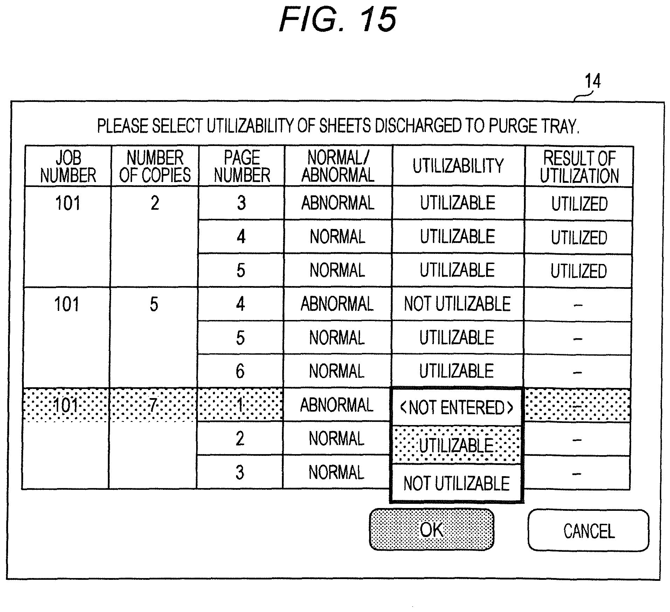

Next, an image forming system according to a fourth embodiment of the present invention will be described with reference to Figs. 14 and 15.

The image forming system according to the fourth embodiment has the same configuration as that of the aforementioned image forming system 5 according to the second embodiment, except for the image forming processing thereof. Therefore, the image forming processing of the image forming system according to the fourth embodiment will be described herein, and the description of the parts of the image forming system according to the fourth embodiment in common with those of the second embodiment will be omitted.

In the aforementioned second embodiment, when an image has been formed on a certain page, the abnormality detection processing is performed, before an image is formed on the next page, by the image inspection apparatus 3 to determine whether or not an abnormality has been detected on the sheet on which the image has been formed for the certain page. However, in the image forming system according to the fourth embodiment, image formation by an image forming apparatus 2 and abnormality detection processing by an image inspection apparatus 3 are performed independently.

Therefore, in the image forming system according to the fourth embodiment, when it has been determined that an abnormality has been detected in the sheet on which an image has been formed (printed) for a certain page, the image forming apparatus 2 already executed or is executing the image formation for the subsequent several pages. In this case, in the recovery processing, it is necessary to perform image formation for the certain page in which the abnormality has been detected and image formation for the subsequent several pages.

Therefore, in the image forming system according to the fourth embodiment, a sheet determined to be abnormal and a sheet that is being conveyed in the image forming apparatus 2 until the abnormality is determined (hereinafter called "the sheet being conveyed at the time of the abnormality") are discharged to an abnormal paper output tray 24. Then, the image inspection apparatus 3 instructs the image forming apparatus 2 to perform recovery processing for the sheet determined to be abnormal and the sheet being conveyed at the time of the abnormality. Accordingly, the image forming apparatus 2 again executes the image formation (printing) for the page determined to be abnormal and the image formation (printing) for the page corresponding to the sheet being conveyed at the time of the abnormality.

When the sheet determined to be abnormal and the sheet being conveyed at the time of the abnormality are discharged to the abnormal paper output tray 24, the user determines whether or not all the discharged sheets are utilizable. At this time, the control unit 10 causes the display unit 14 to display an input screen for entering the determination result of the user. The user enters necessary instructions through the operator 13 in accordance with the display of that input screen.

Fig. 14 is a view showing a first example of the input screen displayed for entering the determination result of the user determination according to the fourth embodiment.

The first example of the input screen according to the fourth embodiment displays a field for entering the page number of the sheet as shown in Fig. 14 when the sheet discharged to the abnormal paper output tray 24 has been determined to be utilized. The first example of the input screen according to the fourth embodiment also displays "CANCEL" and "OK".

Moreover, the first example of the input screen according to the fourth embodiment displays the page number (the number of pages) of the sheet determined to be abnormal. Specifically, displayed is "THIRD PAGE IS ABNORMAL". Furthermore, the first example of the input screen according to the fourth embodiment displays the page numbers (the number of pages) of all the sheets discharged to the abnormal paper output tray 24. Specifically, displayed is "THIRD TO FIFTH PAGES HAVE BEEN PURGED".

After the page numbers of all the sheets determined to be utilizable are entered, and then the "OK" display is selected, the page numbers of the utilized sheets are decided. Accordingly, the control unit 10 adds "1" to all the corresponding utilizable page counters in a RAM 103. On the other hand, when the "CANCEL" display is selected, all the sheets that have been discharged to the abnormal paper output tray 24 are decided to be not utilized.

Fig. 15 is a view showing a second example of the input screen displayed for entering the determination results of the user determination according to the fourth embodiment.

The second example of the input screen according to the fourth embodiment displays the job number, the number of copies (which copy), the page number, normal/abnormal, the utilizability and the result of the utilization as shown in Fig. 15. The second example of the input screen also displays "CANCEL" and "OK."

The job number is, for example, a number associated with each print job instructing image formation. The number of copies indicates which number of copies out of the total number of copies designated in the print job. The page number indicates the page number of the sheet discharged to the abnormal paper output tray 24. Moreover, when the discharged sheet has been determined to be abnormal, "ABNORMAL" is displayed in a cell for normal/abnormal. On the other hand, when the discharged sheet is not determined to be abnormal, "NORMAL" is displayed in a cell for normal/abnormal.

A cell for the utilizability displays "UTILIZABLE" or "NOT UTILIZABLE" from a pull-down menu. When the "UTILIZABLE" display is selected in the cell for the utilizability, the sheet of the corresponding page number is decided to be utilized. On the other hand, when the "NOT UTILIZABLE" display is selected in a cell for the utilizability, the sheet of the corresponding page number is decided to be not utilized.

The result of the utilization indicates whether or not the sheet that has been determined to be abnormal but is utilized has been inserted into normal sheets discharged onto the normal paper output tray 23. When the sheet has been decided to be not utilized, a cell for the result of the utilization displays "-". Moreover, a cell for the result of the utilization displays "-" when the sheet has been decided to be utilized but is not still inserted into the normal sheets discharged onto the normal paper output tray 23. Note that a cell for the result of the utilization may display "NOT UTILIZED" in this case.

When a sheet that has been determined to be utilizable and placed in a PI tray 62 has passed through the image inspection apparatus 3 and discharged to the normal paper output tray 23, "UTILIZED" is displayed in a cell corresponding to the result of the utilization. By displaying the second example of such an input screen according to the fourth embodiment, the user can easily confirm the page number, the utilizability and the result of the utilization even when there are a plurality of sheets determined to be abnormal. Furthermore, it is possible to easily confirm the page number of the sheet being conveyed at the time of the abnormality, which is discharged to the abnormal paper output tray 24 together with the sheet determined to be abnormal.

When the "OK" display is selected, the final decision is made to the entry of "UTILIZABLE" or "NOT UTILIZABLE" selected so far, and the control unit 10 adds "1" to the corresponding utilizable page counter in the RAM 103. On the other hand, when the "CANCEL" display is selected, the setting of "UTILIZABLE" or "NOT UTILIZABLE" is canceled.

Note that, when the sheet that has been determined to be utilizable and placed in the PI tray 62 is discharged to the normal paper output tray 23 through the image inspection apparatus 3, the image forming apparatus 2 is creates a space between sheets before and after the sheet conveyed from the PI tray 62 to be inserted. Accordingly, the sheet placed in the PI tray 62 can be smoothly inserted into the desired space between the normal sheets.

The present invention is not limited to the embodiments described above, and can adopt various other application examples and modification examples as a matter of course without departing from the gist of the present invention described in the claims. That is, the embodiments and examples described above are detailed and specific descriptions of the configurations of the apparatuses in order to clearly explain the present invention, and the present invention is not necessarily limited to one including all the described constituents.

Moreover, the embodiments described above are detailed descriptions in order to clearly explain the present invention, and the present invention is not necessarily limited to one including all the described configurations. Furthermore, part of the configuration of one embodiment can be replaced with the configuration of another embodiment, and the configuration of another embodiment can be added to the configuration of the one embodiment. Further, it is possible to add, delete, and replace other configurations for part of the configurations of the respective embodiments.

In the first to fourth embodiments described above, the image forming apparatus 2 and the image inspection apparatus 3 are constituted as different entities. However, in the image forming system according to the present invention, the configuration for forming an image and the configuration for inspecting the formed image may be included in one apparatus. For example, the image forming apparatus may include the inspection unit, the normal paper outputter and the abnormal paper outputter.

Moreover, in the first to fourth embodiments described above, the display unit 14 is applied as the notifier. However, the notifier according to the present invention is not limited to the display unit, and may be, for example, one that outputs sound such as a speaker. For example, when a speaker is employed as the notifier in the first embodiment, the notification is made by sound to put the utilized sheet on the sheet discharged to the normal paper outputter.

Furthermore, in the second to fourth embodiments described above, the post processing apparatus 6 including the PI tray 62 is provided as a different entity from the image forming apparatus 2 and the image inspection apparatus 3. However, the PI tray and the sheet inserter according to the present invention may be provided in the image forming apparatus 2 or the image inspection apparatus 3.

Further, in the second to fourth embodiments described above, the control unit 10 of the image forming apparatus 2 controls the driving of the conveyance unit 61 of the post processing apparatus 6. However, the post processing apparatus according to the present invention may include the conveyance unit and a control unit that controls the driving of the conveyance unit. In this case, the control unit of the post processing apparatus controls the driving of the conveyance unit in accordance with an instruction from the control unit 10 in the image forming apparatus 2.

Moreover, when an abnormality has been detected in the sheet (which is determined to be abnormal) on which the image is formed in the last copy in the third embodiment described above, the recovery processing is not executed immediately, but the determination result of the user is waited. However, the image forming system according to the present invention may be configured to set the setting in advance as to wait for the determination result of the user or as to execute the recovery processing without waiting for the determination results of the user when an abnormality has been detected in the sheet on which the image has been formed in the last copy.

Although embodiments of the present invention have been described and illustrated in detail, the disclosed embodiments are made for purposes of illustration and example only and not limitation. The scope of the present invention should be interpreted by terms of the appended claims.

## Claims

1. An image forming system (1, 5) comprising:
an image former (15) that forms an image on a sheet;
an image inspection unit (20) that inspects the image which is formed on the sheet by the image former (15), the sheet being conveyed;
a normal paper outputter (23) that discharges a sheet determined to be normal in the inspection by the image inspection unit (20);
an abnormal paper outputter (24) that discharges a sheet determined to be abnormal in the inspection by the image inspection unit (20);
an operator (13) that accepts an input to utilize the sheet discharged to the abnormal paper outputter (24); and
a control unit (10) that causes the image former (15) to execute image formation of a same page of the sheet determined to be abnormal when the sheet has been determined to be abnormal in the inspection by the image inspection unit (20), and causes the image formation of the same page of a utilized sheet in a different copy to be canceled when that utilizing the sheet discharged to the abnormal paper outputter (24) is inputted through the operator (13).

2. The image forming system (1, 5) according to claim 1, further comprising
a notifier (14) that notifies to put the utilized sheet on the sheet discharged to the normal paper outputter (23) when the image formation of the same page of the utilized sheet in the different copy is canceled.

3. The image forming system (1, 5) according to claim 1, further comprising
a sheet inserter (63) that inserts the utilized sheet, wherein
the control unit (10) causes the image formation of the same page of the utilized sheet in the different copy to be canceled when the utilized sheet is set in the sheet inserter (63).

4. The image forming system (1, 5) according to claim 3, wherein
the sheet inserter (63) is provided before the image inspection unit (20), and the image inspection unit (20) determines that a sheet inserted from the sheet inserter (63) is abnormal when the sheet inserted from the sheet inserter (63) is not the utilized sheet.

5. The image forming system (1, 5) according to claim 3 or 4, further comprising
a notifier (14) that notifies that an order of a plurality of the utilized sheets to be set before the sheet inserter (63) is rearranged when the plurality of the utilized sheets are present.

6. The image forming system (1, 5) according to claim 2 or 5, wherein
the notifier (14) notifies of a page number of the sheet determined to be abnormal in the inspection by the image inspection unit (20) and a number of copies.

7. The image forming system (1, 5) according to any one of claims 1 to 6, wherein
the page number of the utilized sheet can be inputted through the operator (13).

8. The image forming system (1, 5) according to any one of claims 1 to 7, wherein
the image inspection unit (20) does not determine that a same abnormality detected on the sheet discharged to the abnormal paper outputter (24) is abnormal when that utilizing the sheet discharged to the abnormal paper outputter (24) is inputted through the operator (13).

9. The image forming system (1, 5) according to any one of claims 1 to 8, wherein
it is possible to set whether or not to cause the image former (15) to execute again formation of the image determined to be abnormal when the sheet determined to be abnormal in the inspection by the image inspection unit (20) is in a last copy.

10. The image forming system (1, 5) according to any one of claims 1 to 9, wherein
the sheet determined to be abnormal in the inspection by the image inspection unit (20) is counted by each page number, and the control unit (10) causes the image formation by the image former (15) to be canceled when an instruction as to whether or not to utilize the sheet discharged to the abnormal paper outputter (24) is not inputted through the operator (13) before image formation is started for a page number with a maximum value of the count in a number of copies with a value obtained by subtracting the maximum value of the count from a value of a last copy.
